# EUROPEAN PATENT APPLICATION

(11) **EP 1 273 394 A2**
(43) Date of publication of application: **08.01.2003**
(21) Application number: 02445073.6
(22) Date of filing: 05.06.2002
(51) Int. Cl.: B25B 9/00, B25B 27/14

(54) **Tool for changing a replaceable cutting head**

(30) Priority: 03.07.2001 SE 0102368
(71) Applicant: SANDVIK AKTIEBOLAG, 811 81 Sandviken (SE)
(72) Inventor: Eriksson, Henrik, 747 94 Alunda (SE)

(57) **Abstract**

The present invention relates to a tool for changing of a replaceable cutting head (S1; S2; S3) of a tool for chip removing machining.

Characteristic of the tool according to the present invention is that the same comprises two L-shaped shanks (1; 101) having a first part (3) and a second part (5), that each one of the shanks (1; 101) at the free end of the first part (3) has a hole (9), in which the second part (5) of the second shank (1; 101) is received, and that the first part (3), in an intermediate portion, has a shoulder (10; 110), which has an extension in the direction towards the free end of the second part (5).

## Description

### Technical Field of the Invention

The present invention relates to a tool for changing a replaceable cutting head of a tool for chip removing machining

### Prior Art

A device for assembling and disassembling a tool unit for chip removing machining is previously known from US-A-5,957,631. This device has a cylindrical cavity with a diameter that equals the diameter of a replaceable cutting head included in the tool unit. In the cavity, convex portions are arranged that may be received in the chip channels of the replaceable cutting head. The device may also be provided with members that prevent the cutting head from falling out of the cavity when the same is fixed therein. The device is rotated by hand when the replaceable cutting head is to be assembled and disassembled. This device only fits a replaceable cutting head having a certain diameter and also in other respects, the cavity of the device and the replaceable cutting head are complementary.

### Aims and Features of the Invention

A primary aim of the present invention is to describe a tool of the kind defined in the introduction, which is exceptionally user-friendly due to the fact that the same may easily be adjusted to different diameters of the replaceable cutting head with which the tool is to co-operate.

Another aim of the present invention is that the tool should be structurally simple, especially it should consist of few components, and thereby also be inexpensive to manufacture.

Yet another aim of the present invention is that the design of the tool should be such that it is able to apply a relatively large torque to the replaceable cutting head.

At least the primary aim of the present invention is realised by means of a tool having the features given in the independent claim 1. Preferred embodiments of the invention are defined in the dependent claims.

### Brief Description of the Drawings

Below, embodiments of the invention will be described with reference being made to the accompanying drawings, where:
- Fig 1: shows a view of a shank included in the tool according to the present invention,
- Fig 2: shows a tool according to the present invention, which consists of two shanks according to Fig 1;
- Fig 3: shows an end view of a tool for chip removing machining, whereby the tool according to Fig 2 is in engagement with a replaceable cutting head of the tool for chip removing machining;
- Fig 4: shows an end view corresponding to Fig 3, whereby the tool according to the present invention is in engagement with the replaceable cutting head of a tool for chip removing machining having a smaller diameter than the tool according to Fig 3;
- Fig 5: shows an alternative embodiment of a shank for a tool according to the present invention;
- Fig 6: shows a tool according to the present invention, which consists of two shanks according to Fig 5;
- Fig 7: shows an end view of a tool for chip removing machining, whereby the tool according to Fig 6 is in a tightening engagement with a replaceable cutting head of the tool for chip removing machining; and
- Fig 8: shows an end view corresponding to Fig 7, whereby the tool according to Fig 6 is in a loosening engagement with a replaceable cutting head.

### Detailed Description of Preferred Embodiments of the Invention

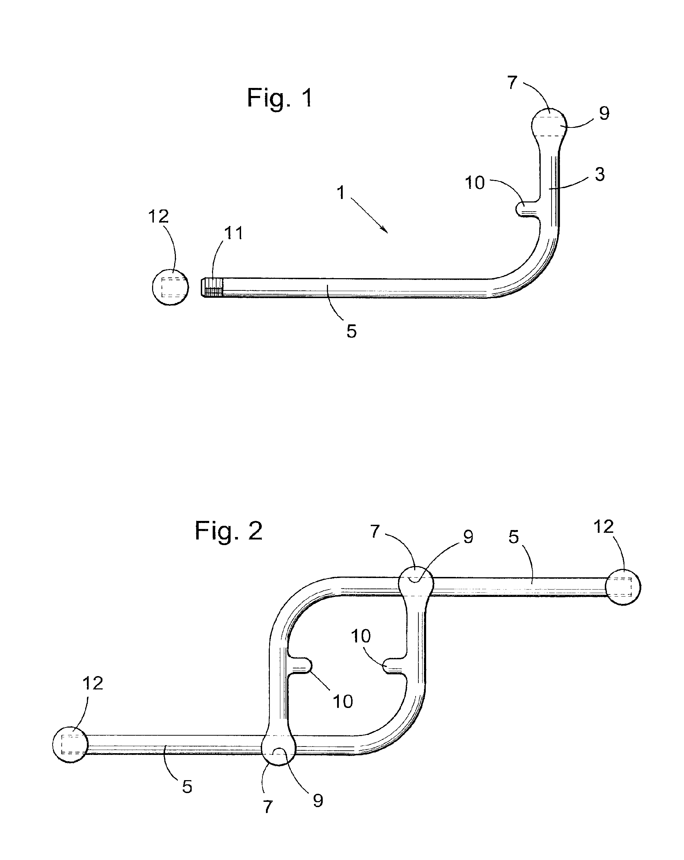

The shank 1, illustrated in fig 1, is generally L-shaped and comprises a first part 3 and a second part 5, whereby the first the part 3 in the illustrated embodiment is shorter than the second part 5. The first part 3 is, at the free end thereof, provided with a thicker portion 7, which is penetrated by a hole 9 having an extension transverse to the extension of the first part 3 and is, in the main parallel to the extension of the second part 5. On an intermediate portion of the first part 3, a shoulder 10 is arranged that has an extension in the direction of the free end of the second part 5.

At the free end thereof, the second part 5 has an external threaded part 11 that is intended to receive an internally threaded hole of a knob 12, which is also included in the tool according to the present invention.

The tool according to the present invention illustrated in fig 2 comprises two, preferably identical, shanks 1, whereby they are mounted in each other by the fact that the second part 5 of one of the shanks 1 is received in the hole 9 of the other shank 1. In order to ensure that the second parts 5 remain in the respective holes thereof, the knobs 12 are applied on the free ends of the second parts 5 thanks to the knobs 12 being threaded on the externally threaded portions 11.

From study of Fig 2, it will be understood that the distance between the shoulders 10 directed towards each other may be varied by a displacement of the thicker portions 7/the holes 9 taking place in relation to the appurtenant second part 5. The diameter of the holes 9 relates to the diameter of the second parts 5 in such a way that a slide fit is formed between the second parts 5 and the holes 9. At a maximum distance between the shoulders 10, the thicker parts 7 will abut against the knobs 12.

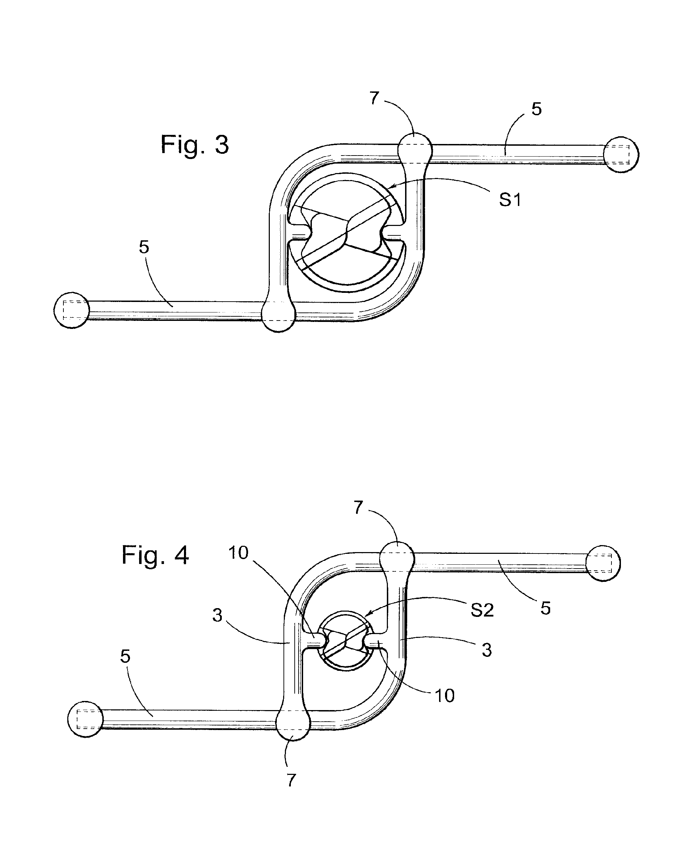

In fig 3, use of the tool according to the present invention is shown with a drill having a relatively large diameter. In that connection, the shoulders 10 are brought to co-operate with, for instance, the chip channels of a replaceable cutting head S1. This takes place by the second parts 5 being displaced in relation to the holes 9. When the outer portions of the parts 5 apply a force in order to rotate the replaceable cutting head S1, a fixing of the second parts 5 in the holes 9 will take place due to the fact that friction is formed between the second parts 5 and the walls of the holes 9. Said friction is sufficient to inhibit relative motion between the second part 5 and the hole 9 of the thicker portion 7 during normal conditions. When the replaceable cutting head S1 has been assembled/disassembled, the tool is removed by distancing the shoulders 10 from each other. This may easily be carried out since the friction between the second part 5 and the hole 9 is formed only when the parts 5 apply forces in order to rotate the replaceable cutting head.

In fig 4, use of the tool according to the present invention is shown on a drill having a substantially smaller diameter than the drill in fig 3. As is seen in Fig 4, an adaptation to the diameter of the replaceable cutting head S2 of the drill is easily carried out by the shoulders 10 being pushed towards each other until they are brought into engagement with the replaceable cutting head S2 and more precisely until they are brought into engagement with a chip channel or some other groove. As for bringing about rotation of the replaceable cutting head, this is carried out in principally the same way as at the replaceable cutting head S according to Fig 3. Disassembly of the tool according to the present invention in relation to the cutting head S2 is carried out by distancing the shoulders 10 from each other.

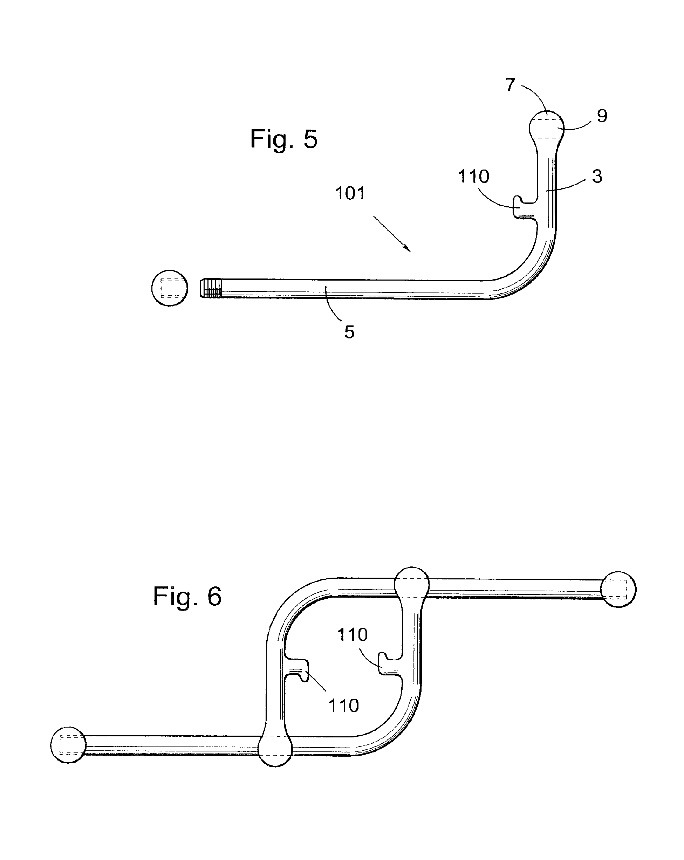

The alternative design of a shank 101, illustrated in fig 5, differs from the shank 1 in the main by the design of the shoulder 110. For that reason, other parts of the shank 101 have been given the same reference designations as for the shank 1. The shoulder 110 has a part with a larger bending radius and a part with a smaller bending radius, whereby the parts continuously transform into each other.

How two identical shanks 101 have been assembled in order to form a tool according to the present invention is shown in fig 6. In that connection, said assembly is carried out in principally the same way as at the tool illustrated in fig 2, i.e. the second parts 5 are received in holes 9 of the thicker portions 7.

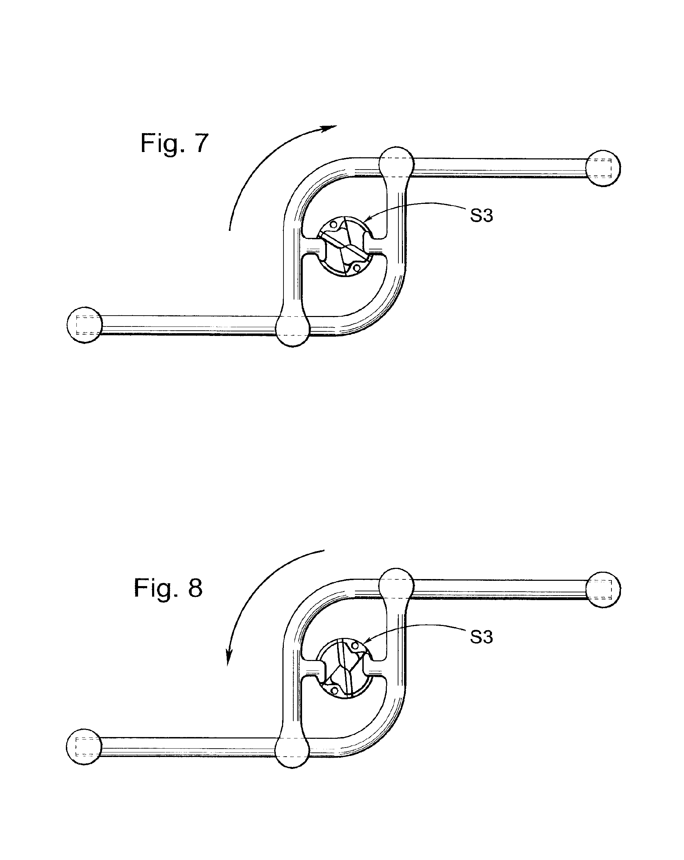

How the tool according to Fig 6 is used with a drill having a relatively small diameter when the replaceable cutting head S3 is to be assembled is shown in fig 7. In that connection, the portions of the shoulders 110 having a large bending radius are brought to co-operate with, for instance, the chip channels of the replaceable cutting head S3.

How the tool according to Fig 6 is used when the replaceable cutting head S3 is to be disassembled is shown in fig 8. In that connection, the portions having a small bending radius of the shoulders 110 are brought to co-operate with, for instance, especially designed grooves.

### Feasible Modifications of the Invention

The two embodiments described above exemplify two designs of the shoulders 10, 110. Naturally, the design of the shoulders may be additionally varied within the scope of the invention, but it is important that a satisfactory co-operation between the shoulders and grooves of a replaceable cutting head is achieved both at tightening and loosening of the replaceable cutting head.

### List of Reference Designations

- 1; 101: Shank
- 3: First part
- 5: Second part
- 7: Thicker portion
- 9: Hole
- 10; 110: Shoulder
- 11: External threaded portion
- 12: Knob
- S1; S2; S3: Replaceable cutting head

## Claims

1. Tool for changing a replaceable cutting head (S1; S2; S3) of a tool for chip removing machining, **character-ized in that** the same comprises two L-shaped shanks (1; 101) having a first part (3) and a second part (5), that each one of the shanks (1; 101) at the free end of the first part (3) has a hole (9), in which the second part (5) of the second shank (1; 101) is received, and that the first part (3), in an intermediate portion, has a shoulder (10; 110) having an extension in the direction towards the free end of the second part (5).

2. Tool according to claim 1, **characterized in that** the hole (9) is arranged in a thicker portion (7).

3. Tool according to claim 1 or 2, **characterized in that** a disassemblable stop (12) is applied at the free end of the second part (5).

4. Tool according to claim 3, **characterized in that** the stop consists of a knob (12) having an internal thread, which in the assembled position of the knob (12) is in engagement with an external thread (11) at the free end of the second part (5).

5. Tool according to one or several of the preceding claims, **characterized in that** the shanks (1; 101) are identical.

6. Tool according to one or several of the preceding claims, **characterized in that** the second part (5) is displaceable in relation to the hole (9) by means of slide fit.

7. Tool according to one or several of the preceding claims, **characterized in that** the shoulder (110) has a part having a larger bending radius and a part having a smaller bending radius, which parts continuously transform into each other.
